# EUROPEAN PATENT APPLICATION

(11) **EP 4 738 899 A1**
(43) Date of publication of application: **06.05.2026**
(21) Application number: 24853454.7
(22) Date of filing: 11.07.2024
(51) Int. Cl.: H04W 8/14

(54) **COMMUNICATION METHOD AND APPARATUS**

(30) Priority: 11.08.2023 CN 202311019597
(71) Applicant: Huawei Technologies Co., Ltd., Shenzhen, Guangdong 518129 (CN)
(72) Inventor: SHI, Xiaoli, Shenzhen, Guangdong 518129 (CN); XU, Ruiyue, Shenzhen, Guangdong 518129 (CN); ZOU, Lan, Shenzhen, Guangdong 518129 (CN)
(74) Representative: Thun, Clemens
(86) International application number: PCT/CN2024/105012
(87) International publication number: WO 2025/036042

(57) **Abstract**

Embodiments of this application provide a communication method and apparatus, and relate to the field of communication technologies. A second device determines a cell identifier NCI list of an integrated access and backhaul IAB node; the second device sends the NCI list of the IAB node to a first device; the first device determines an NCI of the IAB node based on the NCI list; and the first device sends the NCI of the IAB node to the second device. In this method, a network function management service architecture is reused, and a configuration transmission procedure for configuring the cell identifier of the IAB node is provided. According to this method, a problem of an NCI identifier conflict caused by mobility of the IAB node can be avoided, accurate transmission of a service of the IAB node is ensured, and user experience can be improved.

## Description

### CROSS-REFERENCE TO RELATED APPLICATIONS

This application claims priority to Chinese Patent Application No. 202311019597.X, filed with the China National Intellectual Property Administration on August 11, 2023 and entitled "COMMUNICATION METHOD AND APPARATUS", which is incorporated herein by reference in its entirety.

### TECHNICAL FIELD

Embodiments of this application relate to the field of communication technologies, and in particular, to a communication method and apparatus.

### BACKGROUND

To reduce fiber deployment and reduce deployment costs, an integrated access and backhaul (integrated access and backhaul, IAB) network technology is introduced into a 5th generation mobile communication system (5th-generation, 5G). An IAB node may include a mobile termination (mobile termination, MT) part and a distributed unit (distributed unit, DU) part. When being oriented to a parent node of the IAB node, the IAB node may be considered as user equipment, that is, a role of the MT. When being oriented to a child node (where the child node may be another IAB node, or common user equipment (user equipment, UE)) of the IAB node, the IAB node may be considered as a network device providing a backhaul service for the child node, that is, a role of the DU.

The IAB node (IAB-MT) may obtain an OAM service from an operation administration and maintenance (operation administration and maintenance, OAM) entity through a protocol data unit (protocol data unit, PDU) session between the IAB node and a core network entity. The IAB node may also directly obtain the OAM service from the OAM entity through an Internet Protocol (Internet Protocol, IP) backhaul link. To ensure accurate transmission of the OAM service and user experience, cell identifiers may be configured for different IAB nodes. However, how to specifically configure a cell identifier for the IAB node and how to report the cell identifier to the OAM have not been determined yet.

### SUMMARY

This application provides a communication method and a communication apparatus, to determine a configuration and a data transmission procedure of a cell identifier of an IAB node when an architecture of an OAM service is reused.

According to a first aspect, this application provides a communication method. The method may be performed through interaction between a first device and a second device. The second device may be a cross domain management function unit, for example, may be a device like an OAM, a network management system (network management system, NMS), a management service producer (management service producer, MnS Producer), a management service consumer (management service consumer, MnS Consumer), a chip configured to implement the cross domain management function unit, or a cross domain management device. The first device is a domain management function unit like an element management system (element management system, EMS), a mobile broadband automation engine (mobile broadband automation engine, MAE), an MnS producer, an MnS consumer, a radio access network domain management function (radio access network domain management function, RAN-Domain-MnF) unit, or a core network domain management function (core network domain management function, CN-Domain-MnF) unit, a chip configured to implement a domain management function unit, or a single domain management device. In addition, the first device may alternatively be a network element device (for example, a base station, a core network element, and the like), and the second device may alternatively be a domain management network element. Certainly, during actual application, interaction between other devices may also be involved. This is not specifically limited herein. The method is performed as follows.

The second device determines a cell identifier (new radio cell identifier, NCI) list of an IAB node, the second device sends the NCI list of the IAB node to the first device, the first device determines an NCI of the IAB node based on the NCI list, and the first device sends the NCI of the IAB node to the second device.

In this application, after determining the NCI list of the IAB node, the second device transmits the NCI list of the IAB node to the first device, and after determining the NCI of the IAB node, the first device transmits the NCI of the IAB node back to the second device. In this method, a network resource model is established for the IAB node, a network function management service architecture is reused, and a configuration transmission procedure for configuring the cell identifier of the IAB node is provided. According to this method, a problem of an NCI identifier conflict caused by mobility of the IAB node can be avoided, accurate transmission of a service of the IAB node is ensured, and user experience can be improved.

In an optional manner, the first device selects the NCI of the IAB node from the NCI list.

In this manner, the first device selects the NCI of the IAB node from the NCI list, so that a case in which establishment of an F1 interface fails due to an NCI collision caused by movement of the IAB node can be avoided, thereby ensuring accurate transmission of a service of the IAB node, and improving user experience.

In an optional manner, the first device sends the NCI list to an IAB donor base station; the IAB donor base station selects the NCI of the IAB node from the NCI list; the IAB donor base station sends the NCI of the IAB node to the first device; and the first device receives the NCI of the IAB node from the IAB donor base station.

In this manner, the IAB donor base station selects the NCI of the IAB node from the NCI list, so that a case in which establishment of an F1 interface fails due to an NCI collision caused by movement of the IAB node can be avoided, thereby ensuring accurate transmission of a service of the IAB node, and improving user experience.

In an optional manner, the first device is a domain management function unit, and the second device is a cross domain management function unit, where the domain management function unit is a radio access network domain management function unit or a core network domain management function unit.

In an optional manner, the first device is a core network domain management function unit. The IAB donor base station sends the NCI of the IAB node to an access and mobility management function (access and mobility management function, AMF); and the AMF sends the NCI of the IAB node to the first device; or the IAB donor base station sends the NCI of the IAB node to the IAB node; the IAB node sends the NCI of the IAB node to a user plane function (user plane function, UPF); and the UPF send the NCI of the IAB node to the first device.

In this manner, the IAB donor base station transmits an updated NCI of the IAB node to the cross domain management function unit through a core network node, so that an existing transmission architecture of an OAM service is reused, and updating of the NCI of the IAB node in the cross domain management function unit is ensured.

According to a second aspect, this application provides a communication method. The method may be performed through interaction between a first device, a second device, and a third device. The second device may be a cross domain management function unit, for example, a device like an OAM, an NMS, an MnS Producer, or an MnS Consumer, a chip configured to implement the cross domain management function unit, or a cross domain management device. The first device is a radio access network domain management function unit like an EMS, an MAE, an MnS Producer, an MnS Consumer, a RAN-Domain-MnF, or a CN-Domain-MnF, a chip configured to implement a domain management function unit, or a single domain management device. The third device is a core network domain management function unit like a CN-Domain-MnF, a chip configured to implement a domain management function unit, or a single domain management device. In addition, the first device may be a network element device (for example, a base station), the second device may be a domain management network element, and the third device is a network element device (for example, a core network element). Certainly, during actual application, interaction between other devices may also be involved. This is not specifically limited herein. This is not specifically limited herein in this application. The method is performed as follows.

The second device determines an NCI list of an IAB node, the second device sends the NCI list of the IAB node to the first device, the first device determines an NCI of the IAB node based on the NCI list, and the third device sends the NCI of the IAB node to the first device.

In an optional manner, the first device selects the NCI of the IAB node from the NCI list.

In an optional manner, the first device sends the NCI list to an IAB donor base station; the IAB donor base station selects the NCI of the IAB node from the NCI list; and the IAB donor base station sends the NCI of the IAB node to the first device.

In an optional manner, the IAB donor base station sends the NCI of the IAB node to an AMF; and the AMF sends the NCI of the IAB node to the third device.

In an optional manner, before the third device sends the NCI of the IAB node to the second device, the IAB donor base station sends the NCI of the IAB node to the IAB node; the IAB node sends the NCI of the IAB node to a UPF; and the UPF sends the NCI of the IAB node to the third device.

In an optional manner, the NCI includes a base station identifier and a cell identifier.

According to a third aspect, an embodiment of this application provides a communication apparatus. The communication apparatus may be a first device (for example, the first device in the first aspect or the first device in the second aspect) or a chip arranged inside the first device, or may be a second device (for example, the second device in the first aspect or the second device in the second aspect) or a chip arranged inside the second device. The communication apparatus has a function of implementing either the first aspect or the second aspect. For example, the communication apparatus includes a corresponding module, unit, or means (means) for performing the steps in either the first aspect or the second aspect. The function, unit, or means may be implemented by software or hardware, or may be implemented by hardware executing corresponding software.

In a possible design, the communication apparatus includes a processing unit and a transceiver unit. The transceiver unit may be configured to receive and send a signal, to implement communication between the communication apparatus and another apparatus. For example, the transceiver unit is configured to receive information. The processing unit may be configured to perform some internal operations of the communication apparatus. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, or may be referred to as an interface, a communication interface, an interface circuit, or the like; and the processing unit may be a processor, a processing circuit, a logic circuit, or the like.

In another possible design, the communication apparatus includes a processor, and may further include a transceiver. The transceiver is configured to receive and send a signal, and the processor executes program instructions, to implement the method in any possible design or implementation of the first aspect and the second aspect. The communication apparatus may further include one or more memories. The memory is configured to be coupled to the processor, and the memory may store a necessary computer program or necessary instructions for implementing the function in either the first aspect or the second aspect. The processor may execute the computer program or the instructions stored in the memory. When the computer program or the instructions are executed, the communication apparatus is caused to implement the method in any possible design or implementation of the first aspect and the second aspect.

In still another possible design, the communication apparatus includes a processor. The processor may be configured to be coupled to a memory. The memory may store a necessary computer program or necessary instructions for implementing the function in either the first aspect or the second aspect. The processor may execute the computer program or the instructions stored in the memory. When the computer program or the instructions are executed, the communication apparatus is caused to implement the method in any possible design or implementation of the first aspect and the second aspect.

In still another possible design, the communication apparatus includes a processor and an interface circuit. The processor is configured to communicate with another apparatus through the interface circuit, and perform the method in any possible design or implementation of the first aspect and the second aspect.

It may be understood that in the third aspect, the processor may be implemented by hardware or software. When the processor is implemented by hardware, the processor may be a logic circuit, an integrated circuit, or the like. When the processor is implemented by software, the processor may be a general-purpose processor, and is implemented by reading software code stored in the memory. In addition, there may be one or more processors, and there may be one or more memories. The memory may be integrated with the processor, or the memory and the processor are arranged separately. In a specific implementation process, the memory and the processor may be integrated into one chip, or may be arranged on different chips. A type of the memory and an arrangement manner of the memory and the processor are not limited in embodiments of this application.

According to a fourth aspect, an embodiment of this application provides a communication system. The communication system includes the first device and the second device in the first aspect and the second aspect.

According to a fifth aspect, this application provides a chip system. The chip system includes a processor, may further include a memory, and is configured to implement the method according to any one of the possible designs of the first aspect to the fifth aspect. The chip system may include a chip, or may include a chip and another discrete component.

According to a sixth aspect, this application further provides a computer-readable storage medium. The computer-readable storage medium stores computer-readable instructions. When the computer-readable instructions are run on a computer, the computer is caused to perform the method in any one of the possible designs of the first aspect and the second aspect.

According to a seventh aspect, this application provides a computer program product including instructions. When the computer program product runs on a computer, the computer is caused to perform the methods in various embodiments of the first aspect and the second aspect.

For technical effects that can be achieved in the second aspect to the seventh aspect, refer to descriptions of technical effects that can be achieved in corresponding possible design schemes in the first aspect. Details are not described herein again in this application.

### BRIEF DESCRIPTION OF DRAWINGS

FIG. 1 is a diagram of an IAB networking scenario;
FIG. 2 is a diagram of an IAB network architecture;
FIG. 3 is a diagram of a service-based management architecture to which embodiments of this application are applicable;
FIG. 4 is a schematic flowchart of a communication method;
FIG. 5 is a schematic flowchart of a method for configuring an NCI of an IAB node;
FIG. 6A is a diagram of a model of a DU and a DU cell;
FIG. 6B is a diagram of a model of a DU and an IAB node cell;
FIG. 7 is a schematic flowchart of a method for configuring an NCI of an IAB node;
FIG. 8 is a schematic flowchart of a method for configuring an NCI of an IAB node;
FIG. 9 is a schematic flowchart of a method for configuring an NCI of an IAB node;
FIG. 10 is a schematic flowchart of a method for configuring an NCI of an IAB node;
FIG. 11 is a schematic flowchart of a method for configuring an NCI of an IAB node;
FIG. 12 is a diagram of a structure of a communication apparatus;
FIG. 13 is a diagram of a structure of a communication apparatus; and
FIG. 14 is a diagram of a structure of a communication apparatus.

### DESCRIPTION OF EMBODIMENTS

To make objectives, technical solutions, and advantages of this application clearer, the following further describes this application in detail with reference to accompanying drawings. A specific operation method in a method embodiment may also be applied to an apparatus embodiment or a system embodiment. In descriptions of this application, unless otherwise specified, "a plurality of" means two or more than two. Therefore, for implementations of an apparatus and a method, refer to each other, and repeated parts are not described again.

Multi-hop networking may be used in an IAB network. Considering a requirement for service transmission reliability, an IAB node may support dual connectivity (dual connectivity, DC) or multi-connectivity (multi-connectivity), to cope with a possible exception (for example, radio link outage or blockage (blockage), load fluctuation, and the like) on a backhaul link, to enhance transmission reliability assurance. Therefore, the IAB network may support the multi-hop networking and multi-connectivity networking, and there may be a plurality of routing paths between a terminal device and a donor base station. On a path, there is a determined hierarchical relationship between IAB nodes and between an IAB node and a donor base station serving the IAB node. Each IAB node considers a node providing a backhaul service for the IAB node as a parent node, and correspondingly, the IAB node may be considered as a child node of the parent node.

It should be understood that the radio link outage (outage) or blockage (blockage) may cause a radio link failure or radio link congestion. For example, when a building blocks UE and an IAB donor node, a radio link between the UE and the IAB donor node may be blocked. In the conventional technology, main reasons of the radio link failure include a physical layer indicating that a problem occurs in the radio link and lasts for a specific period of time, or a random access failure, or a radio link control (radio link control, RLC) failure. It should be understood that the radio link failure may be caused by another reason. This is not limited in embodiments of this application. The radio link congestion may mean that an uplink data buffer size or a downlink data buffer size that an IAB node needs to transmit on a link exceeds a specific threshold.

Inside the IAB node, an MT part and a DU part may be included. When being oriented to the parent node of the IAB node, the IAB node may be considered as a terminal device accessing the parent node, that is, a role of the MT. When being oriented to the child node of the IAB node, the IAB node may be considered as a network device providing a backhaul service for the child node, that is, a role of the DU. The child node herein may be another IAB node or a terminal device.

The IAB donor node may be an access network element having a complete base station function, for example, a donor base station DgNB, or may be an access network element in a form in which a central unit (central unit, CU) is separated from a DU. The IAB donor node is connected to a core network (for example, connected to a 5G core network) element that serves the terminal device, and provides a wireless backhaul function for the IAB node. For ease of description, the central unit of the IAB donor node is briefly referred to as a donor CU, and the distributed unit of the IAB donor node is briefly referred to as a donor DU. The donor CU may alternatively be in a form in which a control plane (control plane, CP) is separated from a user plane (user plane, UP). For example, the CU may include one CU-CP and one CU-UP (or more CU-UPs).

In embodiments of this application, an access IAB node is an IAB node accessed by the terminal device, that is, an IAB node that provides a service for the terminal device. In an IAB uplink transmission process, the access IAB node transmits, to a target donor DU via one or more other IAB nodes, an uplink data packet sent by the terminal device, and then the target donor DU transmits the uplink data packet to a corresponding donor CU-UP. In an IAB downlink transmission process, if a data packet is sent to a terminal device, the donor CU-UP transmits, to a corresponding donor DU, a downlink data packet sent to the terminal device, and transmits the downlink data packet to an access IAB node corresponding to the terminal device via one or more other IAB nodes or over a direct backhaul link. The access IAB node transmits the received downlink data packet to the terminal device. If the data packet is sent to an IAB node, the donor CU-UP transmits, to a corresponding donor DU, the downlink data packet sent to the IAB node, and transmits the downlink data packet to a parent node of the IAB node via one or more other IAB nodes or over a direct backhaul link, and the parent node of the IAB node then transmits the received downlink data packet to the IAB node.

It should be understood that, in the IAB downlink transmission process, if a node (referred to as a termination node for short below) at which the data packet finally arrives is a terminal device, a target node is an access IAB node corresponding to the terminal device. If the termination node is an IAB node, the target node is a parent node of the IAB node. In the IAB uplink transmission process, the termination node is a donor CU-UP, and the target node is a donor DU corresponding to the donor CU-UP. The target node may also be referred to as a target receiving node.

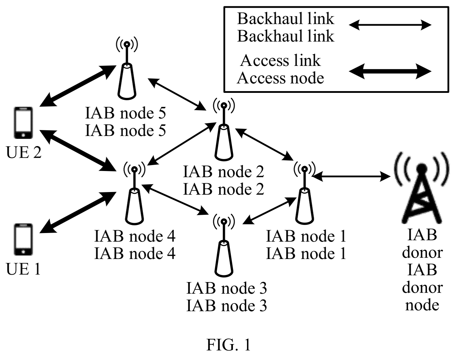

FIG. 1 is a diagram of an IAB networking scenario. In the scenario, a parent node of an IAB node 1 is an IAB donor, the IAB node 1 is a parent node of an IAB node 2 and an IAB node 3, both the IAB node 2 and the IAB node 3 are parent nodes of an IAB node 4, and a parent node of an IAB node 5 is the IAB node 2. An uplink data packet sent by UE 1 may be transmitted to the IAB donor via one or more IAB nodes, and then the IAB donor sends the uplink data packet to a mobile gateway device (for example, a user plane function unit in a 5G core network). After receiving a downlink data packet from the mobile gateway device, the IAB donor sends the downlink data packet to the UE 1 via one or more IAB nodes. This mode also applies to UE 2.

There are two available paths for data packet transmission between the UE 1 and the IAB donor. Path 1: UE 1→IAB node 4→IAB node 3→IAB node 1→IAB donor; and Path 2: UE 1→IAB node 4→IAB node 2→IAB node 1→IAB donor.

The IAB node 4 is an access IAB node of the UE 1. In the path 1, the IAB node 3 and the IAB node 1 are intermediate IAB nodes. In the path 2, the IAB node 2 and the IAB node 1 are intermediate IAB nodes. The IAB donor is a target node.

There are three available paths for data transmission between the UE 2 and the IAB donor. Path 3: UE 2→IAB node 4→IAB node 3→IAB node 1→IAB donor; Path 4: UE 2→IAB node 4→IAB node 2→IAB node 1→IAB donor; and Path 5: UE 2→IAB node 5→IAB node 2→IAB node 1→IAB donor.

In the path 3, the IAB node 4 is an access IAB node of the UE 2, and the IAB node 3 and the IAB node 1 are intermediate IAB nodes. In the path 4, the IAB node 4 is an access IAB node of the UE 2, and the IAB node 2 and the IAB node 1 are intermediate IAB nodes. In the path 5, the IAB node 5 is an access IAB node of the UE 2, and the IAB node 2 and the IAB node 1 are intermediate IAB nodes. The IAB donor is a target node.

It should be understood that the IAB networking scenario shown in FIG. 1 is merely an example, and there are more other possibilities in an IAB network that supports multi-hop networking and multi-connectivity networking. This is not listed one by one herein.

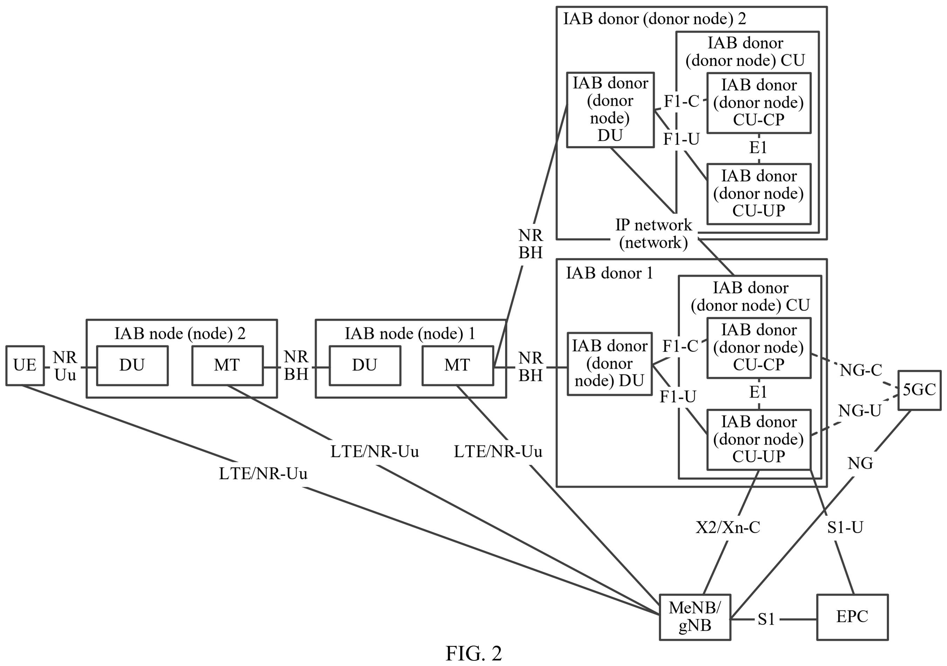

FIG. 2 is a diagram of an IAB network architecture including a standalone (SA) IAB network and a nonstandalone (NSA) IAB network. In FIG. 2, an IAB node 1 and an IAB node 2 are used as an example for description. An IAB donor may be further divided into a DU part and a CU part, and the CU may be further divided into a CU-CP part and a CU-UP part. In FIG. 2, an IAB donor 1 and an IAB donor 2 are used as an example for description.

There is an F1 interface between a DU part of each IAB node and the IAB donor CU. The F1 interface includes two parts: a control plane part and a user plane part. The user plane part is maintained between an IAB-DU and the IAB donor CU-UP, and the control plane part is maintained between the IAB-DU and the IAB donor CU-CP. The F1 interface between the IAB-DU and the IAB donor CU is not shown in FIG. 2. UE is connected to a DU of an IAB node via an NR Uu interface, and an MT and the DU in each IAB node are connected via an NR BH interface. The IAB donor CU-CP is connected to the IAB donor CU-UP via an El interface.

When the IAB node works in an SA mode, the IAB node may establish single connectivity to one parent node or establish dual connectivity to two parent nodes, where the two parent nodes may be controlled by a same IAB donor or respectively controlled by different IAB donors. An F1 interface is established between the DU part of the IAB node and an IAB donor, and the IAB donor may be connected to a 5G core network (5G core, 5GC), that is, a dashed line part in the figure. The IAB-donor-CU-CP is connected to a control plane network element (for example, an access and mobility management function AMF) in the 5GC via an NG control plane interface (NG-C), and the IAB-donor-CU-UP is connected to a user plane network element (for example, a user plane function UPF) in the 5GC via an NG user plane interface (NG-U).

When the IAB node works in an NSA mode (or an EN-DC mode), the IAB-donor-CU-UP may be connected to an EPC (for example, connected to a serving gateway (serving gateway, SGW)) via an S1 user plane interface, an MeNB is connected to the MT of the IAB node via an LTE Uu air interface, the MeNB is connected to the IAB-donor-CU-CP via an X2/Xn-C interface, and the MeNB is connected to the EPC via an S1 interface (including an S1 interface user plane and an S1 interface control plane). For example, the IAB-donor-CU-UP is connected to the EPC via the S1 interface user plane (S1-U).

In another possible case, the MeNB in FIG. 2 may alternatively be replaced with a 5G base station gNB, and the LTE-Uu interface as a dashed line in FIG. 2 is correspondingly replaced with an NR-Uu interface. A user plane interface and/or a control plane interface may be established between the gNB and the 5GC. The gNB and the IAB-donor provide a dual connectivity service for the IAB node. The gNB may serve as a role of a primary base station of the IAB node or a role of a secondary base station of the IAB node.

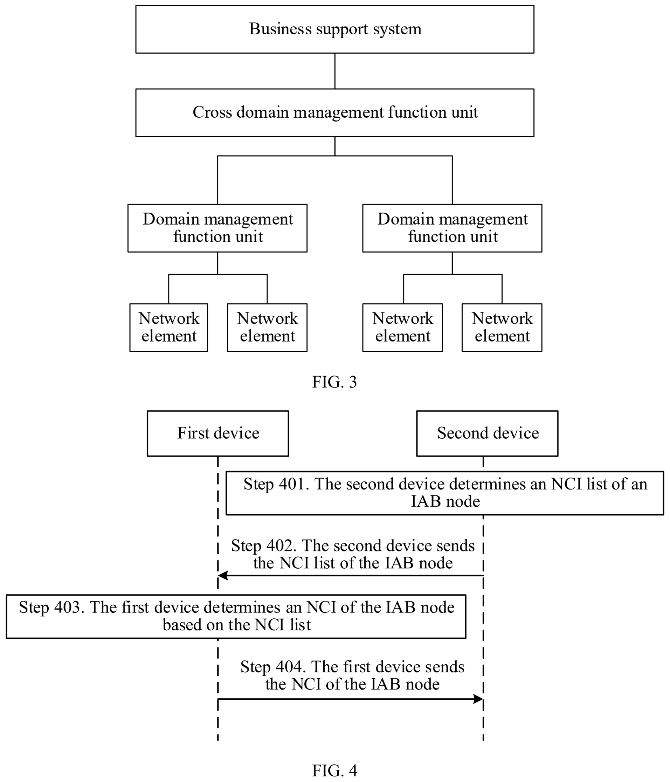

FIG. 3 is a diagram of a service-based management architecture to which embodiments of this application are applicable. The service-based management architecture includes a business support system (business support system, BSS), a cross domain management function (cross domain management function, CD-MnF) unit, a domain management function (domain management function, Domain-MnF) unit, and a network element (element). It should be understood that the cross domain management function unit may be a node like an OAM, an NMS, an MnS Producer, or an MnS Consumer, and the domain management function unit may be a node like an EMS, an MAE, an MnS Producer, or an MnS Consumer.

If a management service is a management service provided by the cross domain management function unit, the cross domain management function unit is a management service producer, and the business support system is a management service consumer.

If the management service is a management service provided by the domain management function unit, the domain management function unit is a management service producer, and the cross domain management function unit is a management service consumer.

If the management service is a management service provided by the network element, the network element is a management service producer, and the domain management function unit is a management service consumer.

The business support system is oriented to a communication service (communication service), and is configured to provide management services and functions such as charging, settlement, accounting, a customer service, business, network monitoring, lifecycle management of the communication service, and translation of a service intent. The business support system may be an operating system of an operator or a vertical industry operating system (vertical OT system).

The cross domain management function unit is also referred to as a network management function (network management function, NMF) unit. For example, the cross domain management function unit may be a network management entity like a network management system (network management system, NMS) or a network function management service consumer (network function management service consumer, NFMS_C). The cross domain management function unit provides one or more of the following management functions or management services: lifecycle management of a network, deployment of a network, fault management of a network, performance management of a network, configuration management of a network, assurance of a network, an optimization function of a network, translation of intent from a communication service provider (intent from communication service provider, Intent-CSP), and the like.

The network indicated by the foregoing management function or the management service may include one or more network elements or sub-networks, or may be a network slice. In other words, the network management function unit may be a network slice management function (network slice management function, NSMF) unit, a cross domain management data analytical function (management data analytics function, MDAF) unit, a cross domain self-organization network function (self-organization network function, SON Function) unit, or a cross domain intent-driven management function (intent-driven management service, IDMS) unit.

Optionally, in some deployment scenarios, the cross domain management function unit may further provide lifecycle management of a sub-network, deployment of a sub-network, fault management of a sub-network, performance management of a sub-network, configuration management of a sub-network, assurance of a sub-network, an optimization function of a sub-network, translation of a sub-network intent from a communication service provider (Intent-CSP) or translation of a sub-network intent from a communication service consumer (intent from communication service consumer, Intent-CSC), and the like. The sub-network herein includes a plurality of small sub-networks, or may be a network slice sub-network.

The domain management function (domain management function, Domain-MnF) unit is also referred to as a sub-network management function (network management function, NMF) unit or a network element management function unit. For example, the domain management function unit may be a network element management entity like an MBB automation engine (MBB automation engine, MAE), a network element management system (element management system, EMS), or a network function management service provider (network function management service provider, NFMS_P).

The domain management function unit provides one or more of the following functions or management services: lifecycle management of a sub-network or a network element, deployment of a sub-network or a network element, fault management of a sub-network or a network element, performance management of a sub-network or a network element, assurance of a sub-network or a network element, an optimization function of a sub-network or a network element, translation of intent from a sub-network or a network element (intent from network operator, Intent-NOP), and the like. The sub-network herein includes one or more network elements. The sub-network may further include a sub-network. In other words, one or more sub-networks form a larger sub-network.

Optionally, the sub-network herein may alternatively be a network slice sub-network. A domain management system may be a network slice sub-network management function (network slice subnet management function, NSSMF) unit, a domain management data analytical function (management data analytical function, Domain MDAF) unit, a domain self-organization network function (self-organization network function, SON Function) unit, a domain intent-driven management service (Intent Driven MnS) unit, or the like.

The domain management function unit may be classified in the following manners, including:

Based on a network type, the domain management function unit may be classified into a radio access network domain management function (radio access network domain management function, RAN-Domain-MnF) unit, a core network domain management function (core network domain management function, CN-Domain-MnF) unit, a transport network domain management function (transport network domain management function, TN-Domain-MnF) unit, and the like. It should be noted that the domain management function unit may alternatively be a domain network management system, and may manage one or more of an access network, a core network, or a transport network.

Based on an administrative region, the domain management function unit may be classified into a domain management function unit of a specific region, for example, a domain management function unit of Shanghai, a domain management function unit of Beijing, and the like.

The network element is an entity that provides a network service, and includes a core network element, an access network element, and the like. The core network element includes an access and mobility management function (access and mobility management function, AMF), a session management function (session management function, SMF), a policy control function (policy control function, PCF), a network data analytical unit (network data analytical function, NWDAF), a network repository unit (NF Repository Function, NRF), a gateway, and the like. The access network element includes a base station (for example, a gNB or an eNB), a central unit control plane (central unit control plane, CUCP), a central unit (central unit, CU), a distributed unit (distributed unit, DU), a central unit user plane (central unit user plane, CUUP), and the like.

The network element may provide one or more of the following management functions or management services: lifecycle management of a network element, deployment of a network element, fault management of a network element, performance management of a network element, assurance of a network element, an optimization function of a network element, translation of intent from a network element, and the like. Certainly, during actual application, the network element may further provide a service for an IAB node and a terminal device.

An IAB-MT may obtain an OAM service from an OAM entity through a PDU session between the IAB-MT and a core network entity. The OAM service includes: command receiving (for example, an operation message command related to FM, CM, and PM), data configuration, software downloading (for example, for device software upgrade), alarms, and performance indicator information. A transmission connection between an IAB node and an OAM of the IAB node uses an IP protocol and is provided by an IAB-MTs PDU session through a 5G network, or is provided by an IAB-MTs PDN connection through an LTE network when the IAB-MT uses EN-DC. The IAB node may also obtain the OAM service from the OAM entity through an IP backhaul link. In this architecture of the IAB node, a problem of allocation of an NCI of the IAB node is being discussed in the 3GPP standard. An IAB donor CU may allocate an NCI to the IAB node based on an NCI candidate list configured by the OAM for the IAB node. However, how to configure the NCI of the IAB node and how to notify the OAM of the configured NCI have not been discussed.

In addition, for a mobile IAB node, when the IAB node moves and an IAB donor CU (which is briefly referred to as a CU below) serving the IAB node changes, processing logic of the IAB node is that an IAB donor DU initiates an F1 establishment process to the CU to exchange NCI information. In this case, if the IAB node conflicts an NCI of another IAB node in the current CU, a problem like an F1 establishment failure occurs.

In the conventional technology, the mobile IAB node accesses a network as a role of UE, and an NCI of the mobile IAB node may be allocated by a cross domain network node (that is, the cross domain management function unit) by default. Because the mobile IAB node may belong to different cross domain network nodes, NCIs of IAB nodes belonging to different cross domain network nodes may be the same. Therefore, an NCI candidate list may be configured by using the cross domain management function unit, and then the NCI is selected by the CU, to avoid an NCI conflict caused by movement of the IAB node.

In addition, the NCI includes a gNBID (a base station identifier) and a celllocalID (a cell identifier). Therefore, there may be two types of NCI candidate lists:
a candidate list of the CelllocalID; and
a candidate list (for the mobile IAB node) of a combination of the gNBID and the celllocalID.

It should be noted that the cell identifier herein may be a cell identifier of the IAB node, or an identifier of the IAB node.

Based on this, this application provides a communication method, to specify how to configure an NCI of an IAB node and how to notify the configured NCI to an OAM. The method may be performed through interaction between a first device and a second device. The second device may be a cross domain management function unit, for example, may be a device like an OAM, an NMS, an MnS Producer, or an MnS Consumer, a chip configured to implement the cross domain management function unit, or a cross domain management device. The first device is a domain management function unit like a EMS, MAE, MnS Producer, MnS Consumer, RAN-Domain-MnF, or a CN-Domain-MnF, a chip configured to implement the domain management function unit, or a single domain management device. In addition, the first device may be a network element device (for example, a base station or a core network element), and the second device may be a domain management network element. Certainly, during actual application, interaction between other devices may also be involved. This is not specifically limited herein. In FIG. 4, the interaction between the first device and the second device is used as an example for description. The method is performed as follows.

Step 401. The second device determines an NCI list of an IAB node.

The foregoing second device has a management function, and may generally configure identification information for a network element node. Based on this, the second device may configure the NCI list for the IAB node.

For example, the second device separately determines candidate NCI lists of a CU 1 and a CU 2. As shown in the following Table 1, the candidate NCI list of the CU 1 includes an NCI 1 to an NCI 10, and the candidate NCI list of the CU 2 includes an NCI 11 to an NCI 20. Two IAB nodes in the CU 1 are respectively an IAB node 1 and an IAB node 2. For each of cells in the IAB node 1 and the IAB node 2, an NCI from the candidate NCI list of the CU 1 may be selected. Three IAB nodes in the CU2 are respectively an IAB node 3, an IAB node 4, and an IAB node 5. For each of cells in the IAB node 3, the IAB node 4, and the IAB node 5, an NCI from the candidate NCI list of the CU 2 may be selected.

**Table 1**

| IAB donor CU | IAB node | Candidate NCI list |
|---|---|---|
| CU 1 | IAB node 1 | NCI 1, NCI 2, NCI 3 NCI 4, NCI 5, NCI 6, NCI 7, NCI 8, NCI 9, NCI 10 |
| | IAB node 2 | |
| CU 2 | IAB node 3 | NCI 11, NCI 12 NCI 13, NCI 14, NCI 15, NCI 16, NCI 17, NCI 18, NCI 19, NCI20 |
| | IAB node 4 | |
| | IAB node 5 | |
| ... | ... | ... |

It should be noted that the candidate NCI list may be a list including base station identifiers (for example, gNBIDs) and cell identifiers (for example, cellLocalIDs). For example, for the NCI candidate list of the CU 1, the NCI 1 is a gNBID 1 and a cellLocalID 1, the NCI 2 is the gNBID 1 and a cellLocalID 2, and the NCI 3 is the gNBID 1 and a cellLocalID 3. For the NCI candidate list of the CU2, the NCI 11 is a gNBID 2 and the cellLocalID 11, the NCI 12 is the gNBID 2 and the cellLocalID 12, and the NCI 13 is the gNBID 2 and the cellLocalID 13. This is merely an example for description, and details are not described herein. Optionally, the candidate NCI list may alternatively be a list including cell identifiers. For example, for the candidate NCI list of the CU 1, the NCI 1 is a cellLocalID 1, the NCI 2 is a cellLocalID 2, and the NCI 3 is a cellLocalID 3. For the candidate NCI list of the CU 2, the NCI 11 is a cellLocalID 11, the NCI 12 is a cellLocalID 12, and the NCI 13 is a cellLocalID 13. This is merely an example for description, details are not described herein.

Optionally, before step 401 is performed, the second device needs to learn that the IAB node accesses a network, that is, the IAB node (IAB-MT) establishes a PDU session with a core network entity. In this case, when accessing the network, the IAB node needs to send indication information of the IAB node to notify the second device that the node is the IAB node. Optionally, whether the node is a mobile IAB node or a non-mobile IAB node may be further indicated. Specifically, when accessing the network, the IAB node sends the indication information of the IAB node to the core network. After receiving the indication information of the IAB node, the core network sends the indication information of the IAB node to the second device (that is, the cross domain management device) through a single domain management device of the core network to notify that the node is the IAB node. For example, the following two solutions may be used: A UPF node of the core network sends the indication information of the IAB node to the second device through the single domain management device of the core network, that is, the indication information of the IAB node needs to be added to an instance of a UPF function (UPFFunction) object class or an AMF node of the core network sends the indication information of the IAB node to an NMS through the single domain management device of the core network, that is, the indication information of the IAB node needs to be added to an instance of an AMF function (AMFFunction) object class.

Step 402. The second device sends the NCI list of the IAB node to the first device.

It should be noted that the NCI list of the IAB node may be only an NCI list, and the NCI list implicitly indicates that the NCI list belongs to the IAB node. Optionally, the second device may further send indication information of the IAB node, where the indication information of the IAB node indicates that the NCI list is for use by the IAB node, that is, the indication information of the IAB node indicates that the NCI list is configured by the second device for the IAB node. A specific implementation is not specifically limited herein in this application.

Step 403. The first device determines an NCI of the IAB node based on the NCI list.

Specifically, the first device may select the NCI of the IAB node from the candidate NCI list, for example, select different NCIs for cells in the IAB node 1 and the IAB node 2 of the CU 1 from the candidate NCI list. In this manner, the first device selects the NCI of the IAB node from the NCI list, so that a case in which establishment of an F1 interface fails due to an NCI collision caused by movement of the IAB node can be avoided, thereby ensuring accurate transmission of a service of the IAB node, and improving user experience.

Optionally, the first device may further send the NCI list to a base station (for example, a gNB-CU or a CU), and the base station selects the NCI of the IAB node. Then, the first device determines the NCI by receiving the NCI of the IAB node from the base station. In this manner, an IAB donor base station selects the NCI of the IAB node from the NCI list, so that a case in which establishment of an F1 interface fails due to an NCI collision caused by movement of the IAB node can be avoided, thereby ensuring accurate transmission of a service of the IAB node, and improving user experience. It should be noted that the first device may directly receive the NCI of the IAB node from the base station, or the first device may receive the NCI of the IAB node from the base station through the AMF of the core network, or the first device may receive the NCI of the IAB node from the IAB node through the UPF of the core network. How the first device specifically determines the NCI of the IAB node is not specifically limited in this application.

Step 404. The first device sends the NCI of the IAB node to the second device.

In addition, it should be further noted that the second device may alternatively directly determine the NCI of the IAB node. In this case, after the second device sends the NCI of the IAB node to the first device, the NCI of the IAB node is forwarded by the first device to the IAB donor base station, and the IAB donor base station then sends the NCI of the IAB node to the IAB node. In this case, the foregoing step 404 does not need to be performed.

In this application, after determining the NCI list of the IAB node, the second device transmits the NCI list of the IAB node to the first device, and after determining the NCI of the IAB node, the first device transmits the NCI of the IAB node back to the second device. In this method, a network resource model is established for the IAB node, a network function management service architecture is reused, and a configuration transmission procedure for configuring a cell identifier of the IAB node is provided. According to this method, a problem of an NCI identifier conflict caused by mobility of the IAB node can be avoided, accurate transmission of a service of the IAB node is ensured, and user experience can be improved.

To better describe the method in this application, the following uses two specific embodiments for description. During actual application, based on the interaction between the first device and the second device, the NCI of the IAB node may be selected from an NCI information list of the IAB node, and the NCI of the IAB node is transmitted back to the second device by the first device; or based on the interaction between the first device and the second device, the NCI of the IAB node may be selected from an NCI information list of the IAB node, and the NCI of the IAB node is transmitted to the second device by a third device. A manner to be performed is not specifically limited in this application. Embodiment 1 and Embodiment 2 are used for specific description below.

**Embodiment 1: Based on the interaction between the first device and the second device, the NCI of the IAB node is selected from the NCI information list of the IAB node, and the NCI of the IAB node is transmitted back to the second device by the first device**

Next, an example in which the second device is a cross domain management function unit and an NMS herein, the first device is a domain management function unit and a radio access network domain management function unit RAN-Domain-MnF, the IAB donor base station is a CU, and an IAB node is used for description. Certainly, during actual application, there may be a plurality of IAB nodes. This is merely an example for description, and a quantity of IAB nodes is not limited herein. An interface between the NMS and the RAN-Domain-MnF (or a CN-Domain-MnF) is a standard interface, which is generally referred to as a service-based interface or a northbound interface. An interface between the RAN-Domain-MnF (or the CN-Domain-MnF) and the CU belongs to a product implementation, which is generally referred to as a southbound interface or a private interface. An interface between the CU and the IAB node is a standard F1 interface. During specific execution, the following three different cases may be included. Details are as follows.

Case 1: The CU selects an NCI of the IAB node, and the CU sends the selected NCI to the NMS through the RAN-Domain-MnF

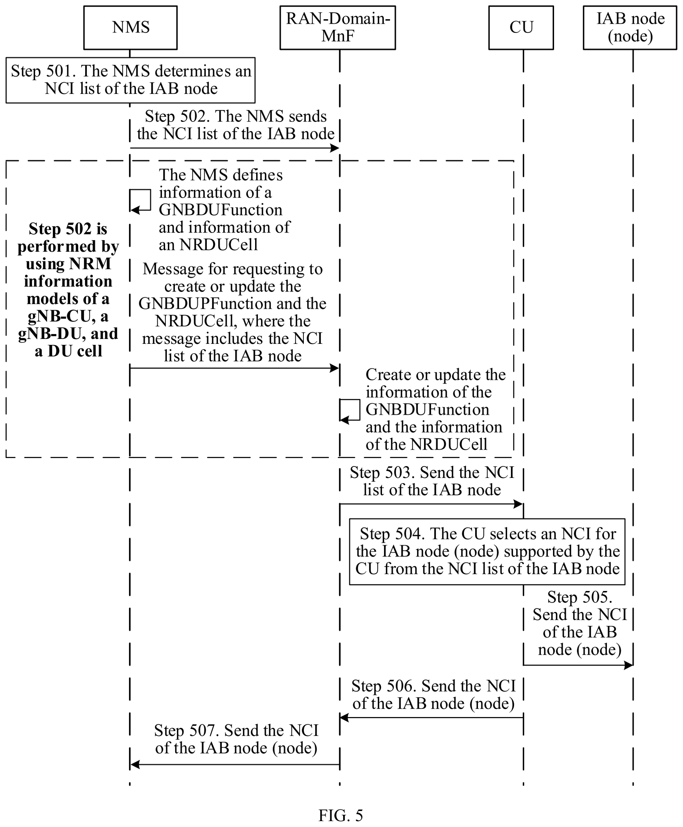

Refer to FIG. 5. The following steps are performed.

Step 501. The NMS determines an NCI list of the IAB node.

Specifically, the NMS determines the NCI list of the IAB node for the CU. For understanding of the NCI list, refer to the descriptions in FIG. 4, and details are not described herein again.

For example, in a scenario in which there are a plurality of CUs, the NMS needs to determine NCI lists of IAB nodes corresponding to the plurality of CUs.

Step 502. The NMS sends the NCI list of the IAB node to the RAN-Domain-MnF.

Optionally, the NMS may further send indication information of the IAB node, where the indication information indicates that the NCI list is used to configure the IAB node.

It should be noted that, the NMS further needs to send identification information of the CU or identification information of a base station to the RAN-Domain-MnF, so that the RAN-Domain-MnF identifies the CU or the base station to which the NCI list belongs.

It should be noted that a candidate NCI list of the IAB node is defined by using an information model of a network resource model (network resource model, NRM) of a network function. That is, the RAN-Domain-MnF needs to establish models of the IAB donor DU and the IAB node in advance, so that the NMS can configure information for the network node. During actual application, NRM information models of the CU, the IAB node, and an IABnodecell may directly reuse definitions of existing NRM information models of a gNB-CU, a gNB-DU, and a DU cell, or an NRM information model of the IAB node may directly reuse a definition of an existing NRM information model of a gNB-DU, and a new NRM information model is defined for an IABnodecell. This is not specifically limited in this application.

It should be noted that the CU may reuse the definition of the existing NRM information model of the gNB-CU. For details, refer to a definition in 3GPP TS 28.541. Details are not described in this application.

It should be further noted that the CU herein may be referred to as a gNB-CU, or may be referred to as an IAB-donor-CU. This is not limited in this application.

The following briefly describes the foregoing two different models:

Model 1. The NRM information models of the CU, the IAB node, and the IAB node cell may directly reuse the definitions of the existing NRM information models of the gNB-CU, the gNB-DU, and the DU cell.

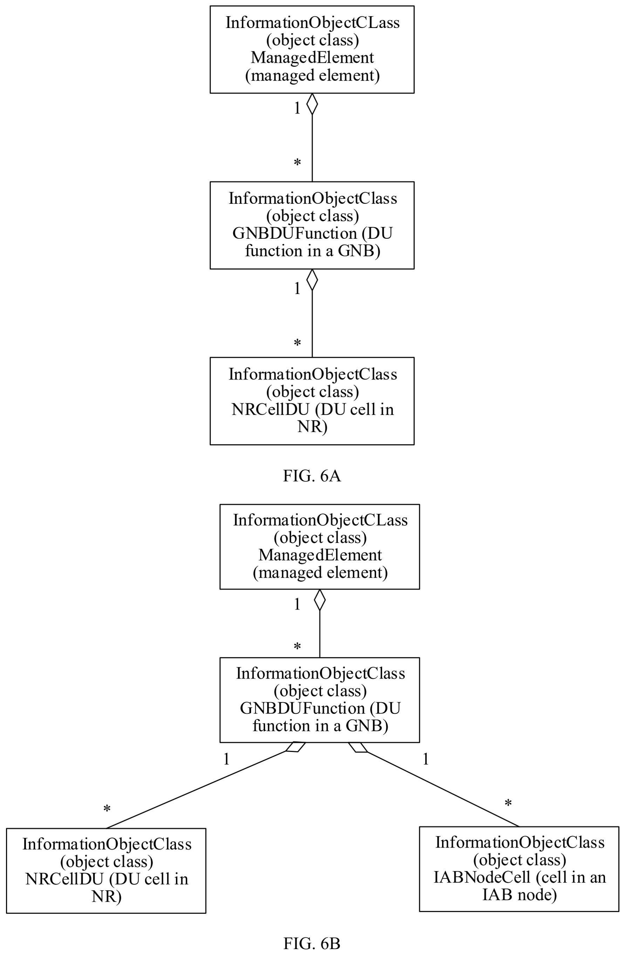

As shown in FIG. 6A, the IAB node reuses a definition of a GNBDUFunction (a DU function in a GNB) of an information object class (informationobjectclass, IOC) (there is one GNBDUFunction or a plurality of GNBDUFunctions, and * in the figure represents a plurality of GNBDUFunctions). The IABnodecell reuses a definition of an NRCellDU IOC (a DU cell in NR) (there is one NRCellDU or a plurality of NRCellDUs, and * in the figure represents a plurality of NRCellDUs). The IOC has been defined in an existing protocol. For details, refer to 3GPP TS 28.541. A name definition is not limited in this application. A ManagedElement (a managed element) IOC is also shown in FIG. 6A, representing a communication device or an entity that is in a communication network and that provides support and/or services to a user, for communicating with a management entity (directly or indirectly) through one or more management interfaces in order to perform management control.

The NMS determines information of the candidate NCI list of the IAB node and/or the indication information of the IAB node, and the NMS sends, to the RAN-Domain-MnF, a message for requesting to create or update the GNBDUFunction IOC and the NRCellDU IOC, where the message includes the candidate NCI list of the IAB node and/or the indication information of the IAB node. After receiving the message for requesting to create or update the GNBDUFunction IOC and the NRDUCell IOC, the RAN-Domain-MnF creates or updates information of the GNBDUFunction IOC and information of the NRDUCell IOC. For example, the information of the GNBDUFunction IOC is shown in the following Table 2. For other existing information of the GNBDUFunction IOC and the information in the NRDUCell IOC, refer to existing descriptions in 3GPP TS 28.541. Details are not described again in this application. It should be noted that IOC NRM model configuration information of the GNBDUFunction IOC and the NRDUCell IOC may be sent in one operation, or may be sent in different operations. This is not limited in this application.

**Table 2**

| Attribute name | Name meaning |
|---|---|
| gNB¬DUId | Identifier of a base station DU |
| gNBDUName | Name of the base station DU |
| gNBId | Base station identifier |
| gNBIdLength | Length of the base station identifier |
| **nCIListIABNode** | Candidate NCI list of the IAB node |
| **IABNodeIndication** | Indication of the IAB node |

Optionally, the NMS determines information of the candidate NCI list of the IAB node and/or the indication information of the IAB node, and the NMS sends, to the RAN-Domain-MnF, a message for requesting to create or update a GNBCUCPFunction IOC, where the message includes the candidate NCI list of the IAB node and/or the indication information of the IAB node. After receiving the message for requesting to create or update the GNBCUCPFunction IOC, the RAN-Domain-MnF creates or updates information of the GNBCUCPFunction IOC. For other existing information of the GNBCUCPFunction IOC, refer to existing descriptions in 3GPP TS 28.541. Details are not described in this application. For example, the information of the GNBCUCPFunction is shown in the following Table 3.

**Table 3**

| Attribute name | Name meaning |
|---|---|
| gNBId | Base station identifier |
| gNBIdLength | Length of the base station identifier |
| gNBCUName | Name of a base station CU |
| pLMNId | Public land mobile network identifier |
| **nCIListIABNode** | Candidate NCI list of the IAB node |
| **IABNodeIndication** | Indication of the IAB node |

Model 2. The NRM information model of the IAB node may directly reuse the definition of the existing NRM information model of the gNB-DU, and a new NRM information model is defined for the IABnodecell

As shown in FIG. 6B, the IAB node reuses a definition of a GNBDUFunction (a DU function in a GNB) (there is one GNBDUFunction or a plurality of GNBDUFunctions, and * in the figure represents a plurality of GNBDUFunctions). The IABnodecell uses a definition of an IABNodeCell (a cell in the IAB node) (there is one IABnodecell or a plurality of IABnodecells, and * in the figure represents a plurality of NRCellDUs). For understanding of a ManagedElement IOC in FIG. 6B, refer to the descriptions of the ManagedElement IOC in FIG. 6A, and details are not described herein again.

The NMS determines information of the candidate NCI list of the IAB node and/or the indication information of the IAB node, and the NMS sends, to the RAN-Domain-MnF, a message for requesting to create or update the GNBDUFunction IOC and the IABNodeCell IOC, where the message includes the candidate NCI list of the IAB node and/or the indication information of the IAB node. After receiving the message for requesting to create or update the GNBDUFunction and the IABNodeCell, the RAN-Domain-MnF creates or updates information of the GNBDUFunction and information of the IABNodeCell. For example, the information of the GNBDUFunction is shown in the following Table 4, and IOC information of the IABNodeCell is shown in the following Table 5. For other existing information of the GNBDUFunction IOC, refer to existing descriptions in 3GPP TS 28.541. Details are not described again in this application.

**Table 4**

| Attribute name | Name meaning |
|---|---|
| gNB¬DUId | Identifier of a base station DU |
| gNBDUName | Name of the base station DU |
| gNBId | Base station identifier |
| gNBIdLength | Length of the base station identifier |
| **nCIListIABNode** | Candidate NCI list of the IAB node |
| **IABNodeIndication** | Indication of the IAB node |

**Table 5**

| Attribute name | Name meaning |
|---|---|
| cellLocalId | Cell local identifier |
| cellState | Cell state |
| pLMNInfoList | Public land mobile network information list |
| nPNIdentityList | Private network identifier list |
| nRPCI | Physical cell identifier |
| nRTAC | Tracking area code |
| arfcnDL | Downlink frequency number |
| arfcnUL | Uplink frequency number |

Optionally, the NMS determines information of the candidate NCI list of the IAB node and/or the indication information of the IAB node, and the NMS sends, to the RAN-Domain-MnF, a message for requesting to create or update the GNBCUCPFunction IOC and the IABNodeCell IOC, where the message includes the candidate NCI list of the IAB node and/or the indication information of the IAB node. After receiving the message for requesting to create or update the GNBCUCPFunction IOC and the IABNodeCell IOC, the RAN-Domain-MnF creates or updates information of the GNBCUCPFunction IOC and information of the IABNodeCell IOC. For other existing information of the GNBCUCPFunction IOC, refer to existing descriptions in 3GPP TS 28.541. Details are not described in this application. For example, the information of the GNBCUCPFunction is shown in the following Table 6. The information of the IABNodeCell is shown in the following Table 7.

**Table 6**

| Attribute name | Name meaning |
|---|---|
| gNBId | Base station identifier |
| gNBIdLength | Length of the base station identifier |
| gNBCUName | Name of a base station CU |
| pLMNId | Public land mobile network identifier |
| **nCIListIABNode** | Candidate NCI list of the IAB node |
| **IABNodeIndication** | Indication of the IAB node |

**Table 7**

| Attribute name | Name meaning |
|---|---|
| cellLocalId | Cell local identifier |
| cellState | Cell state |
| pLMNInfoList | Public land mobile network information list |
| nPNIdentityList | Private network identifier list |
| nRPCI | Physical cell identifier |
| nRTAC | Tracking area code |
| arfcnDL | Downlink frequency number |
| arfcnUL | Uplink frequency number |

It should be further noted that the foregoing Table 2 to Table 7 are merely examples for description. During actual application, each IOC may further include another attribute name. This is not specifically shown in this application. In addition, the RAN-Domain-MnF may obtain the NCI list of the IAB node by creating or updating the IOC information. That is, in this embodiment, in FIG. 5, an example in which the NCI list of the IAB node is obtained in the manner of the model 1 is used for description. Certainly, during actual application, the NCI list of the IAB node may also be obtained in the manner of the model 2. This is merely an example for description and is not specifically limited herein.

Step 503. The RAN-Domain-MnF sends the NCI list of the IAB node to the CU.

Optionally, in step 503, the RAN-Domain-MnF further sends an identifier of a gNBDU to an IAB donor CU.

It should be noted that this step may be implemented by using a product, and does not need to be standardized.

Step 504. The CU selects an NCI for the IAB node supported by the CU from the NCI list of the IAB node.

For example, the CU selects different NCIs, that is, NCIs that do not conflict, for an IAB node 1 and an IAB node 2 that are supported by the CU.

It should be noted that the current IAB node may already have a preset NCI, and the CU reselects an NCI for the IAB node from the NCI list and configures the NCI for the IAB node.

Step 505. The CU sends the NCI of the IAB node to the IAB node.

For example, in FIG. 5, an example in which the CU sends the NCI of the IAB node 1 to the IAB node 1 and sends the NCI of the IAB node 2 to the IAB node 2 is used for description.

It should be noted that the CU may send the NCI to the IAB node by using an existing F1 interface message or by using another new message. This is not limited in this application.

Step 506. The CU sends the NCI of the IAB node to the RAN-Domain-MnF.

For example, the CU sends the NCI of the IAB node 1 and the NCI of the IAB node 2 to the RAN-Domain-MnF.

It should be noted that, herein, it may also be understood that the CU sends a reconfigured NCI of the IAB node to the RAN-Domain-MnF.

Step 507. The RAN-Domain-MnF sends the NCI of the IAB node to the NMS.

For example, the RAN-Domain-MnF sends the NCI of the IAB node 1 and the NCI of the IAB node 2 to the NMS.

It should be noted that the RAN-Domain-MnF further needs to send identification information of a CU corresponding to the IAB node to the NMS, so that the NMS identifies a CU node in which the IAB node is located.

Specifically, the NCI of the IAB node 1 includes a cellLocalId and a gNBDUId. When there is a plurality of IAB nodes, the information of the IAB nodes may be sent in a form of a list, or may be independently sent. This is not limited in this application.

When step 507 is performed, an existing notification operation, for example, a notification change (Notification notifyMOIChanges) operation may be used, that is, the notification operation may be used to notify the NMS that the NCI (the cellLocalID or the gNBID) in an IOC model of the gNBDUFunction, the NRCellDU, or the IABNodeCell is updated. Alternatively, a newly defined operation may be used. For example, the NMS is notified by updating the nCIListIABNode in Table 2. This is not limited in this application.

Case 2: The RAN-Domain-MnF selects an NCI of the IAB node, and the RAN-Domain-MnF sends the selected NCI to the NMS

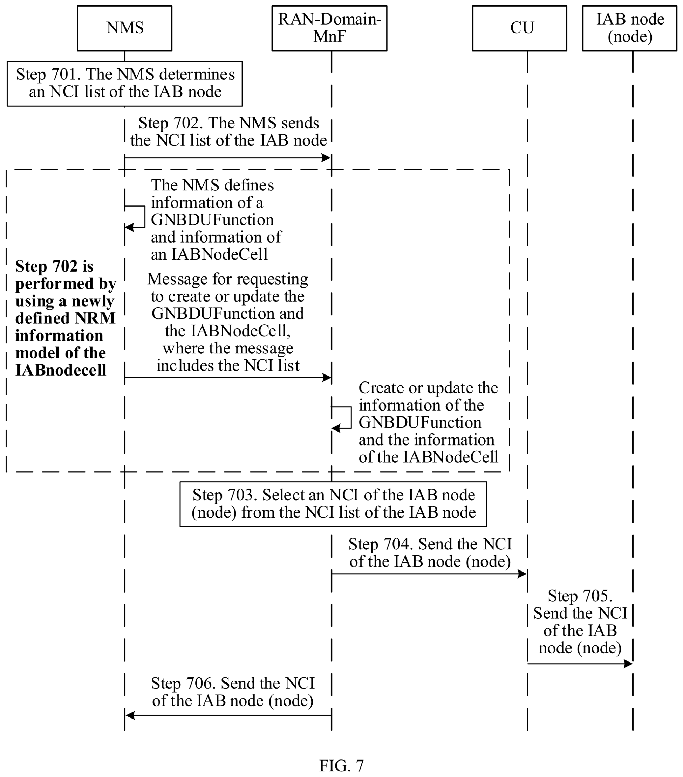

Refer to FIG. 7. The following steps are performed.

Step 701. The NMS determines an NCI list of the IAB node.

Specifically, the NMS determines the NCI list of the IAB node for the CU. For understanding of the NCI list, refer to the descriptions in FIG. 4, and details are not described herein again.

For example, in a scenario in which there are a plurality of CUs, the NMS needs to determine NCI lists of IAB nodes corresponding to the plurality of CUs.

Step 702. The NMS sends the NCI list of the IAB node to the RAN-Domain-MnF.

Optionally, the NMS may further send indication information of the IAB node, where the indication information indicates that the NCI list is used to configure the IAB node.

It should be noted that, the NMS further needs to send identification information of the CU or identification information of a base station to the RAN-Domain-MnF, so that the RAN-Domain-MnF identifies the CU or the base station to which the NCI list belongs.

It should be further noted that the CU herein may be referred to as a gNB-CU, or may be referred to as an IAB-donor-CU. This is not limited in the present invention.

Refer to step 502 in FIG. 5 for understanding, and details are not described herein again. In FIG. 7, an example in which the NCI list of the IAB node is obtained in the manner of the model 2 is used for description. Certainly, during actual application, the NCI list of the IAB node may also be obtained in the manner of the model 1. This is merely an example for description and is not specifically limited herein.

Step 703. The RAN-Domain-MnF selects the NCI of the IAB node from the NCI list of the IAB node.

For example, the RAN-Domain-MnF selects an NCI for the IAB node supported by the CU managed by the RAN-Domain-MnF, for example, selects different NCIs, that is, NCIs that do not conflict, for an IAB node 1 and an IAB node 2 in a CU 1.

It should be noted that, the current IAB node may already have a preset NCI, and the RAN-Domain-MnF reselects an NCI for the IAB node from the NCI list and configures the NCI for the IAB node.

Step 704. The RAN-Domain-MnF sends the NCI of the IAB node to the CU.

For example, the RAN-Domain-MnF sends the NCI of the IAB node 1 and the NCI of the IAB node 2 to the CU.

Step 705. The CU sends the NCI of the IAB node to the IAB node.

For example, the CU sends the NCI of the IAB node 1 to the IAB node 1, and sends the NCI of the IAB node 2 to the IAB node 2.

It should be noted that the CU may send the NCI to the IAB node by using an existing F1 interface message or by using another new message. This is not limited in this application.

Step 706. The RAN-Domain-MnF sends the NCI of the IAB node to the NMS.

During actual application, moments at which step 706 and step 704 are performed are not limited. Step 706 may be performed before step 704, or may be performed simultaneously with step 704. This is not specifically limited herein.

For example, the RAN-Domain-MnF sends the NCI of the IAB node 1 and the NCI of the IAB node 2 that are of the CU 1 to the NMS.

It should be noted that, herein, it may also be understood that the RAN-Domain-MnF sends a reconfigured NCI of the IAB node to the NMS.

It should be further noted that the RAN-Domain-MnF further needs to send identification information of a CU corresponding to the IAB node to the NMS, so that the NMS identifies a CU node in which the IAB node is located.

When step 706 is performed, an existing notification operation, for example, a notification change Notification notifyMOIChanges operation may be used, that is, the notification operation may be used to notify the NMS that the NCI (a cellLocalID or a gNBID) in an IOC model of a gNBDUFunction, an NRCellDU, or an IABNodeCell is updated. Alternatively, a newly defined operation may be used. For example, the NMS is notified by updating the nCIListIABNode in Table 2. This is not limited in this application.

Case 3: The NMS selects an NCI of the IAB node

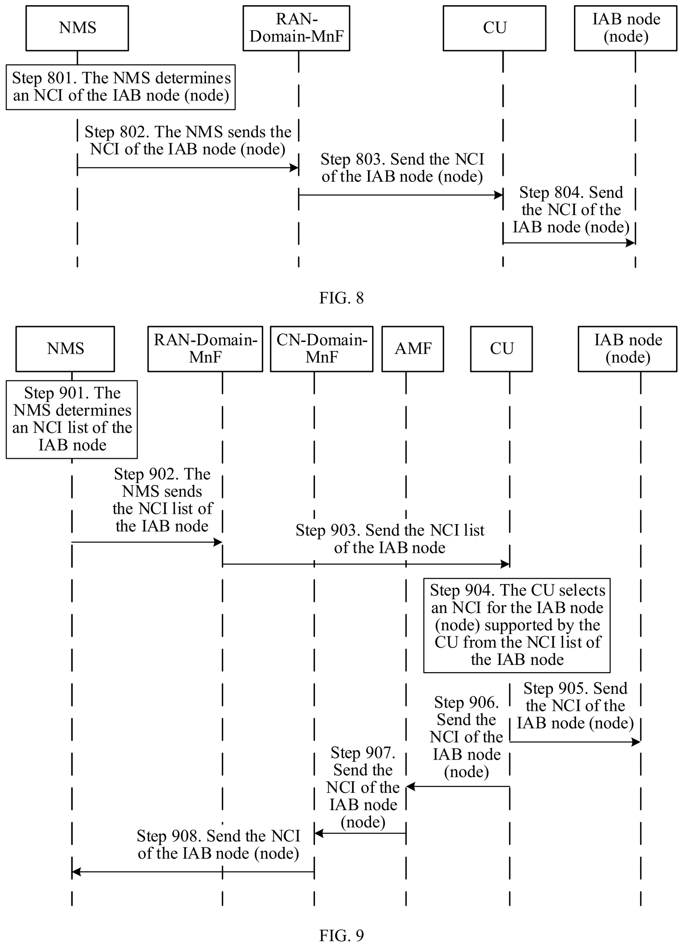

Refer to FIG. 8. The following steps are performed.

Step 801. The NMS determines the NCI of the IAB node in the CU.

For example, the NMS determines an NCI of an IAB node 1 and an NCI of an IAB node 2 that are of a CU 1.

Step 802. The NMS sends the NCI of the IAB node to the RAN-Domain-MnF.

For example, the NMS sends the NCI of the IAB node 1 and the NCI of the IAB node 2 to the RAN-Domain-MnF.

It should be noted that, the NMS further needs to send identification information of the CU or identification information of a base station to the RAN-Domain-MnF, so that the RAN-Domain-MnF identifies the CU or the base station to which the NCI belongs.

It should be further noted that the CU herein may be referred to as a gNB-CU, or may be referred to as an IAB-donor-CU. This is not limited in the present invention.

Optionally, the NMS may further send indication information of the IAB node, where the indication information indicates that the NCI is used to configure the IAB node.

Refer to step 502 in FIG. 5 for understanding, and details are not described herein again. However, during actual application, when step 802 is performed by using a model, information of nCIListIABNode and IABNodeIndication does not need to be transmitted. This is merely an example for description and is not specifically limited herein.

Step 803. The RAN-Domain-MnF sends the NCI of the IAB node to the CU.

Step 804. The CU sends the NCI of the IAB node to the IAB node.

It should be noted that, in this embodiment of this application, the NMS and the CN-Domain-MnF may alternatively transmit an NCI list of the IAB node or the NCI of the IAB node through a northbound interface, and the CN-Domain-MnF may send the NCI list of the IAB node or the NCI of the IAB node to the CU through an AMF or a UPF.

**Embodiment 2: Based on the interaction between the first device and the second device, the NCI of the IAB node is selected from the NCI information list of the IAB node, and the NCI of the IAB node is transmitted back to the second device by the third device**

During actual application, the first device may further receive the NCI of the IAB node from the third device. An example in which the second device is a cross domain management function unit and an NMS herein, the first device is a domain management function unit and a radio access network domain management function unit RAN-Domain-MnF herein, the third device is a domain management function unit and a core network domain management function unit CN-Domain-MnF herein, the IAB donor base station is a CU, and an IAB node is used for description. Certainly, during actual application, there may be a plurality of IAB nodes. This is merely an example for description, and a quantity of IAB nodes is not limited herein. During specific execution, the following three different cases may be used as examples for description. Details are as follows.

Case 1: The CU selects an NCI of the IAB node, the CU sends the selected NCI to an AMF, and the AMF sends the selected NCI to the NMS through the CN-Domain-MnF

Refer to FIG. 9. The following steps are performed.

Step 901. The NMS determines an NCI list of the IAB node.

Specifically, the NMS determines an NCI list of an IAB node in an IAB donor CU. For understanding of the NCI list, refer to the descriptions in FIG. 4, and details are not described herein again. Specifically, refer to step 501 for understanding, and details are not described herein again.

Step 902. The NMS sends the NCI list of the IAB node to the RAN-Domain-MnF.

Optionally, the NMS may further send indication information of the IAB node, where the indication information indicates that the NCI list is used to configure the IAB node.

It should be noted that, the NMS further needs to send identification information of the CU or identification information of a base station to the RAN-Domain-MnF, so that the RAN-Domain-MnF identifies the CU or the base station to which the NCI list belongs.

It should be further noted that the CU herein may be referred to as a gNB-CU, or may be referred to as an IAB-donor-CU. This is not limited in the present invention.

Refer to step 502 in FIG. 5 for understanding, and details are not described herein again.

Step 903. The RAN-Domain-MnF sends the NCI list of the IAB node to the CU.

Step 904. The CU selects an NCI for the IAB node supported by the CU from the NCI list of the IAB node.

For example, the CU selects different NCIs, that is, NCIs that do not conflict, for an IAB node 1 and an IAB node 2 that are supported by the CU.

It should be noted that the current IAB node may already have a preset NCI, and the CU reselects an NCI for the IAB node from the NCI list and configures the NCI for the IAB node.

Step 905. The CU sends the NCI of the IAB node to the IAB node.

For example, the CU sends the NCI of the IAB node 1 to the IAB node 1, and sends the NCI of the IAB node 2 to the IAB node 2.

Step 906. The CU sends the NCI of the IAB node to the AMF.

For example, a CU 1 sends the NCI of the IAB node 1 and the NCI of the IAB node 2 to the AMF.

Specifically, the NCI may be sent by using an existing NG interface message or by using a newly defined message. This is not limited in this application.

It should be noted that, the CU further needs to send an identifier of the CU or an identifier of a base station to the AMF, so that the AMF identifies the CU to which the NCI of the IAB node belongs.

Step 907. The AMF sends the NCI of the IAB node to the CN-Domain-MnF.

For example, the AMF sends the NCI of the IAB node 1 and the NCI of the IAB node 2 to the CN-Domain-MnF.

This step may be implemented by using a product, and a specific implementation is not described in the present invention.

Step 908. The CN-Domain-MnF sends the NCI of the IAB node to the NMS.

Specifically, the foregoing step 908 may be implemented by adding an attribute of information of the IAB node to an existing network management instance AMFFunction IOC.

It should be noted that, the information of the IAB node (an IABnodeinformation attribute) includes the NCI (a cellLocalId and/or a gNBId) of the IAB node, and optionally, may further include one or more of identifiers such as a gNB identifier (gNBId), a DU identifier (gNBDUId), and a CU identifier (gNBCUId).

For example, attributes in the AMFFunction IOC are shown in the following Table 8. For another existing attribute in the AMFFunction, refer to a definition in TS 28.541. Details are not described in the present invention.

**Table 8**

| Attribute name | Name meaning |
|---|---|
| pLMNInfoList | Public land mobile network information list |
| aMFIdentifier | Access and mobility management function identifier |
| **iABnodeinformation** | IABnode information |

In this manner, the core network node transmits the updated NCI of the IAB node to the cross domain management function unit, so that an existing transmission architecture of an OAM service is reused, and updating of the NCI of the IAB node in the cross domain management function unit is ensured.

Case 2: The CU selects an NCI of the IAB node, the IAB node sends the selected NCI to a UPF, and the UPF sends the selected NCI to the NMS through the CN-Domain-MnF

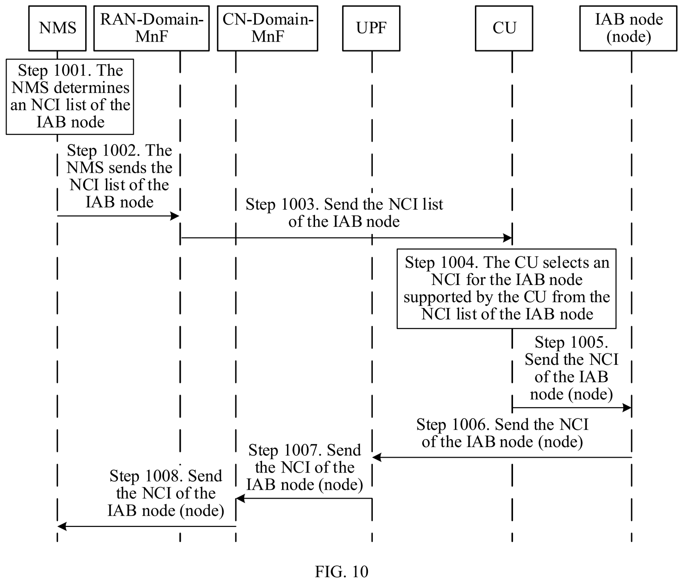

Refer to FIG. 10. The following steps are performed.

Step 1001. The NMS determines an NCI list of the IAB node.

Specifically, the NMS determines an NCI list of an IAB node in an IAB donor CU. For understanding of the NCI list, refer to the descriptions in FIG. 4, and details are not described herein again. Specifically, refer to step 501 for understanding, and details are not described herein again.

Step 1002. The NMS sends the NCI list of the IAB node to the RAN-Domain-MnF.

Optionally, the NMS may further send indication information of the IAB node, where the indication information indicates that the NCI list is used to configure the IAB node.

It should be noted that, the NMS further needs to send identification information of the CU or identification information of a base station to the RAN-Domain-MnF, so that the RAN-Domain-MnF identifies the CU or the base station to which the NCI list belongs.

It should be further noted that the CU herein may be referred to as a gNB-CU, or may be referred to as an IAB-donor-CU. This is not limited in the present invention.

Refer to step 502 in FIG. 5 for understanding, and details are not described herein again.

Step 1003. The RAN-Domain-MnF sends the NCI list of the IAB node to the CU.

Step 1004. The CU selects an NCI for the IAB node supported by the CU from the NCI list of the IAB node.

For example, the CU selects different NCIs, that is, NCIs that do not conflict, for an IAB node 1 and an IAB node 2 that are supported by the CU.

It should be noted that the current IAB node may already have a preset NCI, and the CU reselects an NCI for the IAB node from the NCI list and configures the NCI for the IAB node.

Step 1005. The CU sends the NCI of the IAB node to the IAB node.

For example, the CU sends the NCI of the IAB node 1 to the IAB node 1, and sends the NCI of the IAB node 2 to the IAB node 2.

Step 1006. The IAB node sends the NCI of the IAB node to the UPF.

For example, a CU 1 sends the NCI of the IAB node 1 and the NCI of the IAB node 2 to the UPF.

It should be noted that the CU may transmit the NCI to the UPF in an existing PDU session transmission manner.

It should be noted that, the CU further needs to send an identifier of the CU or an identifier of a base station to the UPF, so that the UPF identifies the CU to which the NCI of the IAB node belongs.

Step 1007. The UPF sends the NCI of the IAB node to the CN-Domain-MnF.

For example, the UPF sends the NCI of the IAB node 1 and the NCI of the IAB node 2 to the CN-Domain-MnF. Specifically, the information may be packaged into data for sending through a data plane channel of an existing PDU session.

Step 1008. The CN-Domain-MnF sends the NCI of the IAB node to the NMS.

Specifically, the foregoing step 1008 may be implemented by adding an attribute of the NCI of the IAB node to an existing network management instance UPFFunction.

It should be noted that, the information of the IAB node (an IABnodeinformation attribute) includes the NCI (a cellLocalId and/or a gNBId) of the IAB node, and optionally, may further include one or more of identifiers such as a gNB identifier (gNBId), a DU identifier (gNBDUId), and a CU identifier (gNBCUId).

For example, the UPFFunction is shown in the following Table 9. For another existing attribute in the UPFFunction, refer to a definition in TS 28.541. Details are not described in the present invention.

**Table 9**

| Attribute name | Name meaning |
|---|---|
| pLMNInfoList | Public land mobile network information list |
| nRTAClist | NR tracking area code list |
| **iABnodeinformation** | IAB node information |

In this manner, the core network node transmits the updated NCI of the IAB node to the cross domain management function unit, so that an existing transmission architecture of an OAM service is reused, and updating of the NCI of the IAB node in the cross domain management function unit is ensured.

Case 3: The IAB node selects an NCI of the IAB node, the IAB node sends the selected NCI to a UPF, and the UPF sends the selected NCI to the NMS through the CN-Domain-MnF

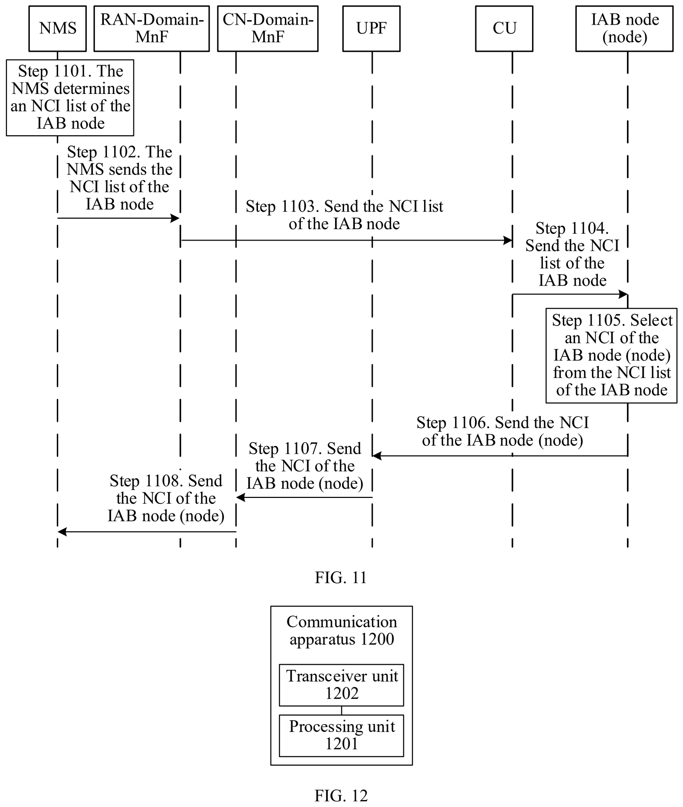

Refer to FIG. 11. The following steps are performed.

Step 1101. The NMS determines an NCI list of the IAB node.

Specifically, the NMS determines the NCI list of the IAB node in an IAB donor CU. For understanding of the NCI list, refer to the descriptions in FIG. 4, and details are not described herein again. Specifically, refer to step 501 for understanding, and details are not described herein again.

Step 1102. The NMS sends the NCI list of the IAB node to the RAN-Domain-MnF.

Optionally, the NMS may further send indication information of the IAB node, where the indication information indicates that the NCI list is used to configure the IAB node.

It should be noted that, the NMS further needs to send identification information of the CU or identification information of a base station to the RAN-Domain-MnF, so that the RAN-Domain-MnF identifies the CU or the base station to which the NCI list belongs.

It should be further noted that the CU herein may be referred to as a gNB-CU, or may be referred to as an IAB-donor-CU. This is not limited in the present invention.

Refer to step 502 in FIG. 5 for understanding, and details are not described herein again.

Step 1103. The RAN-Domain-MnF sends the NCI list of the IAB node to the CU.

Step 1104. The CU sends the NCI list of the IAB node to the IAB node supported by the CU.

For example, a CU1 separately sends the NCI list of the IAB node to an IAB node 1 and an IAB node 2.

Step 1105. The IAB node selects the NCI of the IAB node from the NCI list of the IAB node.

For example, the IAB node 1 selects the NCI of the IAB node 1 from the NCI list of the IAB node, and the IAB node 2 selects the NCI of the IAB node 2 from the NCI list of the IAB node.

Step 1106. The IAB node sends the NCI of the IAB node to the UPF.

For example, the IAB node 1 sends the NCI of the IAB node 1 to the UPF, and the IAB node 2 sends the NCI of the IAB node 2 to the UPF.

Step 1107. The UPF sends the NCI of the IAB node to the CN-Domain-MnF.

For example, the UPF sends the NCI of the IAB node 1 and the NCI of the IAB node 2 to the CN-Domain-MnF. Specifically, the information may be packaged into data for sending through a data plane channel of an existing PDU session.

Step 1108. The CN-Domain-MnF sends the NCI of the IAB node to the NMS. Refer to the descriptions of step 1108 for understanding, and details are not described herein again.

In this manner, the core network node transmits the updated NCI of the IAB node to the cross domain management function unit, so that an existing transmission architecture of an OAM service is reused, and updating of the NCI of the IAB node in the cross domain management function unit is ensured.

The foregoing mainly describes the solutions provided in embodiments of this application from a perspective of device interaction. It may be understood that, to implement the foregoing functions, each device may include a corresponding hardware structure and/or software module for performing each function. A person skilled in the art should be easily aware that, in embodiments of this application, the units and algorithm steps in the examples described with reference to embodiments disclosed in this specification can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the device may be divided into functional units based on the foregoing method examples. For example, each functional unit may be obtained through division based on a corresponding function, or two or more functions may be integrated into one unit. The integrated unit may be implemented in a form of hardware, or may be implemented in a form of a software functional unit.

When an integrated unit is used, FIG. 12 is a possible example block diagram of a communication apparatus according to an embodiment of this application. As shown in FIG. 12, the communication apparatus 1200 may include a processing unit 1201 and a transceiver unit 1202. The processing unit 1201 is configured to control and manage an action of the communication apparatus 1200. The transceiver unit 1202 is configured to support communication between the communication apparatus 1200 and another device. Optionally, the transceiver unit 1202 may include a receiving unit and/or a sending unit that are/is respectively configured to perform a receiving operation and a sending operation. Optionally, the communication apparatus 1200 may further include a storage unit, configured to store program code and/or data of the communication apparatus 1200. The transceiver unit may be referred to as an input/output unit, a communication unit, or the like, and the transceiver unit may be a transceiver. The processing unit may be a processor. When the communication apparatus is a module (for example, a chip) in a communication device, the transceiver unit may be an input/output interface, an input/output circuit, an input/output pin, or the like, or may be referred to as an interface, a communication interface, an interface circuit, or the like; and the processing unit may be a processor, a processing circuit, a logic circuit, or the like. Specifically, the apparatus may be the foregoing first device, second device, third device, and the like.

In an embodiment, the communication apparatus 1200 is the first device. The transceiver unit 1202 is configured to receive an NCI list of an IAB node from the second device, the processing unit 1201 is configured to determine an NCI of the IAB node based on the NCI list, and the transceiver unit 1202 is further configured to send the NCI of the IAB node to the second device.

Specifically, the processing unit 1201 may select the NCI of the IAB node from the NCI list.

Specifically, the transceiver unit 1202 may send the NCI list to an IAB donor base station, and receive the NCI of the IAB node from the IAB donor base station.

During actual application, the communication apparatus may be a domain management function unit, and the second device is a cross domain management function unit, where the domain management function unit is a radio access network domain management function unit or a core network domain management function unit.

It should be noted that the first device is a core network domain management function unit, and the transceiver unit 1202 may further receive the NCI of the IAB node sent by the IAB donor base station through an AMF; or receive the NCI of the IAB node sent by the IAB node through a UPF.

In an embodiment, the communication apparatus 1200 is the second device. The processing unit 1201 is configured to determine a cell identifier NCI list of an IAB node, and the transceiver unit is configured to send the NCI list of the IAB node and receive an NCI of the IAB node.

Specifically, the processing unit 1201 is configured to: send NCI list information of the IAB node to the first device; and receive the NCI of the IAB node from the first device, where the first device is a radio access network domain management function unit or a core network domain management function unit, and the communication apparatus is a cross domain management function unit.

Specifically, the processing unit 1201 is configured to: send NCI list information of the IAB node to the first device; and receive the NCI of the IAB node from the third device, where the first device is a radio access network domain management function unit, the communication apparatus is a cross domain management function unit, and the third device is a core network domain management function unit.

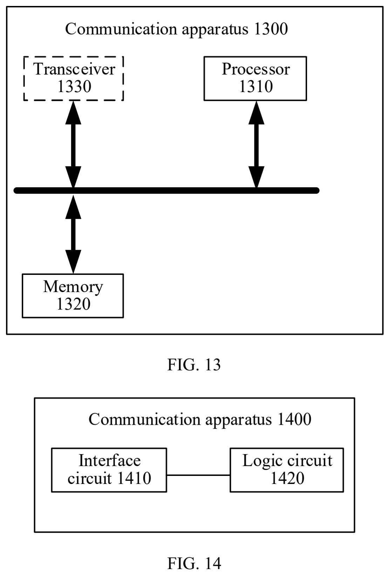

As shown in FIG. 13, a communication apparatus 1300 is further provided in this application. The communication apparatus 1300 may be a chip or a chip system. The communication apparatus may be located in a device, for example, the first device, the second device, or the like, in any one of the foregoing method embodiments, to perform an action corresponding to the device.

Optionally, the chip system may include a chip, or may include a chip and another discrete component.

The communication apparatus 1300 includes a processor 1310.

The processor 1310 is configured to execute a computer program stored in a memory 1320, to implement an action of each device in any one of the foregoing method embodiments.

The communication apparatus 1300 may further include the memory 1320, configured to store the computer program.

Optionally, the memory 1320 is coupled to the processor 1310. The coupling is an indirect coupling or a communication connection between apparatuses, units, or modules, may be in an electrical form, a mechanical from, or another form, and is for information exchange between the apparatuses, the units, or the modules. Optionally, the memory 1320 and the processor 1310 are integrated together.

There may be one or more processors 1310 and one or more memories 1320. This is not limited.

Optionally, during actual application, the communication apparatus 1300 may include a transceiver 1330 or may not include a transceiver 1330, which is represented by using a dashed-line box in the figure. The communication apparatus 1300 may exchange information with another device by using the transceiver 1330. The transceiver 1330 may be a circuit, a bus, a transceiver, or any other apparatus that can be configured to perform information interaction.

In a possible implementation, the communication apparatus 1300 may be an access network device in the foregoing method embodiments or a first core network device.

A specific connection medium between the transceiver 1330, the processor 1310, and the memory 1320 is not limited in this embodiment of this application. In this embodiment of this application, the memory 1320, the processor 1310, and the transceiver 1330 are connected by using a bus in FIG. 13, and the bus is represented by using a bold line in FIG. 13. This is merely an example for description and imposes no limitation, and there may be another connection manner between the components. The bus may be classified into an address bus, a data bus, a control bus, and the like. For ease of representation, only one bold line is used for representation in FIG. 13, but this does not mean that there is only one bus or only one type of bus. In embodiments of this application, the processor may be a general-purpose processor, a digital signal processor, an application-specific integrated circuit, a field programmable gate array or another programmable logic device, a discrete gate or a transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (hard disk drive, HDD) or a solid-state drive (solid-state drive, SSD), or may be a volatile memory (volatile memory), for example, a random access memory (random access memory, RAM). Alternatively, the memory may be any other medium that can be configured to carry or store expected program code in a form of an instruction or a data structure and that can be accessed by a computer, but is not limited thereto. Alternatively, the memory in embodiments of this application may be a circuit or any other apparatus that can implement a storage function, and is configured to store a computer program, program instructions, and/or data.

Based on the foregoing embodiments, refer to FIG. 14. An embodiment of this application further provides another communication apparatus 1400, including: an interface circuit 1410 and a logic circuit 1420. The interface circuit 1410 may be understood as an input/output interface, and may be configured to perform sending and receiving steps of each device in any one of the foregoing method embodiments. The logic circuit 1420 may be configured to run code or instructions to perform the method performed by each device in any one of the foregoing embodiments. Details are not described again.

Based on the foregoing embodiments, an embodiment of this application further provides a computer-readable storage medium. The computer-readable storage medium stores instructions. When the instructions are executed, the method performed by each device in any one of the foregoing method embodiments implemented. For example, the method performed by the first device or the second device in the embodiment shown in FIG. 4 is implemented. The computer-readable storage medium may include any medium that can store program code, for example, a USB flash drive, a removable hard disk, a read-only memory, a random access memory, a magnetic disk, or an optical disc.

Based on the foregoing embodiments, an embodiment of this application provides a communication system. The communication system includes the first device (for example, a RAN-Domain-MnF) and the second device (for example, an NMS) mentioned in any one of the foregoing method embodiments, and may be configured to perform the method performed by each device in any one of the foregoing method embodiments.

In addition, the communication system may further include a terminal (for example, UE). The terminal may perform data exchange with an access network device and a core network device, to perform a related method in any one of the foregoing method embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a compact disc read-only memory (compact disc read-only memory, CD-ROM), an optical memory, and the like) that include computer-usable program code.

This application is described with reference to the flowcharts and/or the block diagrams of the method, the apparatus (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of another programmable data processing apparatus to generate a machine, so that the instructions executed by the computer or the processor of the another programmable data processing apparatus generate an apparatus for implementing a specific function in one or more processes in the flowcharts and/or in one or more blocks in the block diagrams.

These computer program instructions may be alternatively stored in a computer-readable memory that can indicate a computer or another programmable data processing apparatus to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may alternatively be loaded onto a computer or another programmable data processing apparatus, so that a series of operation steps are performed on the computer or the another programmable apparatus to generate computer-implemented processing. Therefore, the instructions executed on the computer or the another programmable apparatus provide steps for implementing a specific function in one or more processes in the flowcharts and/or in one or more blocks in the block diagrams.

## Claims

1. A communication method, comprising:
receiving, by a first device, a cell identifier NCI list of a first integrated access and backhaul IAB node from a second device;
determining, by the first device, an NCI of the IAB node based on the NCI list; and
sending, by the first device, the NCI of the IAB node to the second device.

2. The method according to claim 1, wherein the determining, by the first device, the NCI of the IAB node based on the NCI list comprises:
selecting, by the first device, the NCI of the IAB node from the NCI list.

3. The method according to claim 1, wherein the determining, by the first device, the NCI of the IAB node based on the NCI list comprises:
sending, by the first device, the NCI list to an IAB donor base station; and
receiving, by the first device, the NCI of the IAB node from the IAB donor base station.

4. The method according to any one of claims 1 to 3, wherein the first device is a domain management function unit, and the second device is a cross domain management function unit, wherein the domain management function unit is a radio access network domain management function unit or a core network domain management function unit.

5. The method according to claim 3, wherein when the first device is a core network domain management function unit, the receiving, by the first device, the NCI of the IAB node from the IAB donor base station comprises:
receiving, by the first device, the NCI of the IAB node sent by the IAB donor base station through an access and mobility management function AMF; or
receiving, by the first device, the NCI of the IAB node sent by the IAB node through a user plane function UPF.

6. A communication method, comprising:
determining, by a second device, a cell identifier NCI list of an integrated access and backhaul IAB node;
sending, by the second device, the NCI list of the IAB node; and
receiving, by the second device, an NCI of the IAB node.

7. The method according to claim 6, wherein the sending, by the second device, the NCI list of the IAB node comprises:
sending, by the second device, NCI list information of the IAB node to a first device; and
the receiving, by the second device, the NCI of the IAB node comprises:
receiving, by the second device, the NCI of the IAB node from the first device, wherein
the first device is a radio access network domain management function unit or a core network domain management function unit, and the second device is a cross domain management function unit.

8. The method according to claim 6, wherein the sending, by the second device, the NCI list of the IAB node comprises:
sending, by the second device, NCI list information of the IAB node to a first device; and
the receiving, by the second device, the NCI of the IAB node comprises:
receiving, by the second device, the NCI of the IAB node from a third device, wherein
the first device is a radio access network domain management function unit, the second device is a cross domain management function unit, and the third device is a core network domain management function unit.

9. A communication method, comprising:
determining, by a second device, a cell identifier NCI list of an integrated access and backhaul IAB node;
sending, by the second device, the NCI list of the IAB node to a first device;
determining, by the first device, an NCI of the IAB node based on the NCI list; and
sending, by the first device, the NCI of the IAB node to the second device.

10. The method according to claim 9, wherein the determining, by the first device, the NCI of the IAB node based on the NCI list comprises:
selecting, by the first device, the NCI of the IAB node from the NCI list.

11. The method according to claim 9, wherein the determining, by the first device, the NCI of the IAB node based on the NCI list comprises:
sending, by the first device, the NCI list to an IAB donor base station;
selecting, by the IAB donor base station, the NCI of the IAB node from the NCI list; and
sending, by the IAB donor base station, the NCI of the IAB node to the first device.

12. The method according to any one of claims 9 to 11, wherein the first device is a domain management function unit, and the second device is a cross domain management function unit, wherein the domain management function unit is a radio access network domain management function unit or a core network domain management function unit.

13. The method according to claim 11, wherein when the first device is a core network domain management function unit, the sending, by the IAB donor base station, the NCI of the IAB node to the first device comprises:
sending, by the IAB donor base station, the NCI of the IAB node to an access and mobility management function AMF; and
sending, by the AMF, the NCI of the IAB node to the first device.

14. The method according to claim 11, wherein when the first device is a core network domain management function unit, the sending, by the IAB donor base station, the NCI of the IAB node to the first device comprises:
sending, by the IAB donor base station, the NCI of the IAB node to the IAB node;
sending, by the IAB node, the NCI of the IAB node to a user plane function UPF; and
sending, by the UPF, the NCI of the IAB node to the first device.

15. A communication method, comprising:
determining, by a second device, a cell identifier NCI list of an integrated access and backhaul IAB node;
sending, by the second device, the NCI list of the IAB node to a first device;
determining, by the first device, an NCI of the IAB node based on the NCI list; and
sending, by a third device, the NCI of the IAB node to the second device.

16. The method according to claim 15, wherein the first device is a radio access network domain management function unit, the second device is a cross domain management function unit, and the third device is a core network domain management function unit.

17. The method according to claim 15 or 16, wherein the determining, by the first device, the NCI of the IAB node based on the NCI list comprises:
selecting, by the first device, the NCI of the IAB node from the NCI list.

18. The method according to claim 17, wherein the determining, by the first device, the NCI of the IAB node based on the NCI list comprises:
sending, by the first device, the NCI list to an IAB donor base station;
selecting, by the IAB donor base station, the NCI of the IAB node from the NCI list; and
sending, by the IAB donor base station, the NCI of the IAB node to the first device.

19. The method according to claim 16, wherein before the sending, by the third device, the NCI of the IAB node to the second device, the method further comprises:
sending, by an IAB donor base station, the NCI of the IAB node to an access and mobility management function AMF; and
sending, by the AMF, the NCI of the IAB node to the third device.

20. The method according to claim 19, wherein before the sending, by the third device, the NCI of the IAB node to the second device, the method further comprises:
sending, by the IAB donor base station, the NCI of the IAB node to the IAB node;
sending, by the IAB node, the NCI of the IAB node to a user plane function UPF; and
sending, by the UPF, the NCI of the IAB node to the third device.

21. The method according to any one of claims 1 to 20, wherein the NCI comprises a base station identifier and a cell identifier.

22. A communication apparatus, comprising functional modules for implementing the method according to any one of claims 1 to 21.

23. A communication apparatus, comprising at least one processor, wherein the processor is coupled to a memory; and
the at least one processor is configured to execute a computer program or instructions, to cause the method according to any one of claims 1 to 21 to be performed.

24. The communication apparatus according to claim 23, further comprising at least one memory, wherein
the memory is configured to store the computer program or the instructions.

25. A chip system, wherein the chip system comprises a processing circuit, wherein the processing circuit is coupled to a storage medium; and
the processing circuit is configured to: execute a part or all of a computer program or instructions in the storage medium, and implement, when the part or all of the computer program or the instructions are executed, the method according to any one of claims 1 to 21.

26. A computer-readable storage medium, wherein the computer-readable storage medium stores instructions, and when the instructions are executed by a computer, the method according to any one of claims 1 to 21 is performed.

27. A computer program product comprising a computer program or instructions, wherein when the computer program product runs on a computer, the method according to any one of claims 1 to 21 is performed.
